# EUROPÄISCHE PATENTSCHRIFT

(11) **EP 0 849 576 B1**
(45) Veröffentlichungstag und Bekanntmachung des Hinweises auf die Patenterteilung: **26.05.1999**
(21) Anmeldenummer: 97121981.1
(22) Anmeldetag: 12.12.1997
(51) Int. Cl.: G01L 1/14, G01L 5/28

(54) **Kapazitiver Kraftsensor**
Capacitive force sensor
Capteur capacitif de forces

(30) Priorität: 20.12.1996 DE 19653427
(43) Veröffentlichungstag der Anmeldung: 24.06.1998
(73) Patentinhaber: SIEMENS AKTIENGESELLSCHAFT, 80333 München (DE)
(72) Erfinder: Brandmeier, Thomas, Dr.-Ing., 93173 Wenzebach (DE); Doemens, Günter, 83607 Holzkirchen (DE); Gilch, Markus, 85419 Mauern (DE)

(56) Entgegenhaltungen:
- WO-A-92/15000
- DE-A- 1 909 979
- GB-A- 1 497 212
- US-A- 4 089 036

## Beschreibung

Die Erfindung betrifft einen Kraftsensor zur direkten Kraftmessung im Kraftfluß. Unter direkter Kraftmessung ist die direkte Beaufschlagung des Sensorelementes mit der zu messenden Kraft zu verstehen. Dabei gibt der Kraftsensor die zu messende Kraft meist gegenüberliegend weiter und mißt gleichzeitig.

Die Betätigung von Bremsen, insbesondere im Kraftfahrzeugbereich, erfolgt heute hydraulisch. Aus verschiedenen Gründen wird man in Zukunft auf rein elektrisch betätigte Bremsen übergehen. Dabei wird der Bremsbacken über einen Elektromotor mit Getriebe betätigt. Dies kann beispielsweise durch die Bewegung einer in einem Elektromotor laufenden Spindel geschehen.

Aus Sicherheitsgründen sowie zur Regelung des Bremsvorganges ist eine ständige Bremskraftmessung erforderlich. Diese sollte möglichst unmittelbar am Bremsbacken erfolgen. In diesem Bereich herrschen jedoch erhebliche Temperaturunterschiede. Der an einem Bremssattel zu berücksichtigende Temperaturbereich geht von ca. -40°C bis ca. 350°C. Der Kraftmeßbereich reicht bis hinauf zu einigen Tonnen. Zusätzlich soll natürlich eine hohe Genauigkeit gewährleistet sein, beispielsweise eine Meßsicherheit mit weniger als 1% Abweichung. Diese Summe von Anforderungen wird noch ergänzt von sehr schnellen Temperaturwechseln beim normalem Betrieb einer Kraftfahrzeugbremse. Hinzu kommen außerdem enorme Stoßbelastungen senkrecht zur Kraftfahrzeugachse. Somit sollte der Kraftsensor eine Dauerlastwechselfestigkeit sowie eine absolute Unempfindlichkeit gegenüber Feuchtigkeit aufweisen. Sinnvoll ist ebenfalls eine Unempfindlichkeit gegenüber elektromagnetischer Strahlung. Erschwerend kommt weiterhin dazu, daß für den Kraftsensor nur ein geringer Platz im Bereich der Kraftfahrzeugbremsen zur Verfügung steht und daß die Systemkosten möglichst gering sein sollen.

Bisher bekannte Kraftsensoren sind beispielsweise Piezoaufnehmer oder Dehnmeßstreifenaufnehmer. Dabei stellen die letztgegnannten eine indirekte Meßmethode dar, wobei der Sensor nicht im Kraftfluß liegt. Beide genannten Systeme erfüllen die extremen obengenannten Anforderungen nicht annäherend. Andere Systeme sind beispielsweise kapazitive Druck- und Kraftaufnehmer auf Siliziumbasis. Diese genügen jedoch nicht den extremen Betriebsbedingungen, sowie den Kostenanforderungen.

Aus der Druckschrift DE-A-1909979 ist eine zylindersymmetrische kapazitive Kraftmeßdose bekannt, bei die Bewegung der Meßmembran auf eine zentral an der Membran befestigte Metallplatte übertragen wird. Die Gegenelektroden sind metallisierte Isolatorscheiben. Die Befestigung der die Gegenelektroden tragenden Isolatorscheiben am Gehäuse ist durch Schrauben und Distanzstücke realisiert.

Der Erfindung liegt die Aufgabe zugrunde, einen Kraftsensor mit einem ausgedehnten Meßbereich bezüglich der zu messenden Kraft und der zu erwartenden Betriebstemperatur bei gleichzeitig hoher Meßgenauigkeit zu liefern.

Die Lösung dieser Aufgabe geschieht durch die jeweiligen Merkmale der Patentansprüche 1 oder 2.

Der Erfindung liegt die Erkenntnis zugrunde,daß ein aus einem metallischen Hohlzylinder bestehender kapazitiver Kraftsensor der zwischen Aktuator bzw. Stellantrieb und einem mechanischen Bremelement, beispielsweise einem Bremsbacken, im Kraftfluß eingebaut ist, sämtliche gewünschten Anforderungen erfüllt werden. Zumindest eine Stirnseite dieses geschlossenen hohlzylinderförmigen Sensors ist als eine kraftaufnehmende Membran ausgebildet. Die Verwendung eines kapazitiven Sensors beinhaltet die Erzeugung von Meßsignalen aufgrund des veränderbaren Plattenabstandes eines Plattenkondensators. Ein solcher Plattenkondensator ist innerhalb des hohlzylinderförmgin Sensors eingebaut. Die Kopplung zwischen einer kraftaufnehmenden Membran des Sensorgehäuses bzw. einer Stirnseite eines Sensors und dem Plattenkondensator geschieht derart, daß Abstandsänderungen zwischen den Elektroden des Plattenkondensators über deren gesamte Fläche gleichmäßig geschehen, so daß die parallel ausgerichteten Elektroden nur parallel gegeneinander verschoben werden und sich in ihrer Geometrie nicht verändern.

Vorteilhafte Ausgestaltungen sind den Unteransprüchen zu entnehmen.

Im folgenden werden anhand von schematischen Figuren Ausführungsbeispiele beschrieben, wobei die einzelnen Elemente in den verschiedenen Figuren einheitlich bezeichnet sind.
Figur 1 zeigt eine Schnittdarstellung eines Kraftsensors 1 mit einer als kraftaufnehmende Membran 31 ausgebildeten Stirnseite ,
Figur 2 zeigt eine Schnittdarstellung eines Kraftsensors 1 mit zwei mechanisch untereinander verbundenen kraftaufnehmenden Membranen 31, 32,
Figur 3 zeigt eine schematische Schnittdarstellung eines Kraftfahrzeugbremssystemes mit im Kraftfluß integriertem Kraftsensor 1,
Figur 4 zeigt eine schematische Darstellung eines Kraftsensors 1, wobei die erste Elektrode 2 geteilt und jeweils getrennt kontaktiert ist.

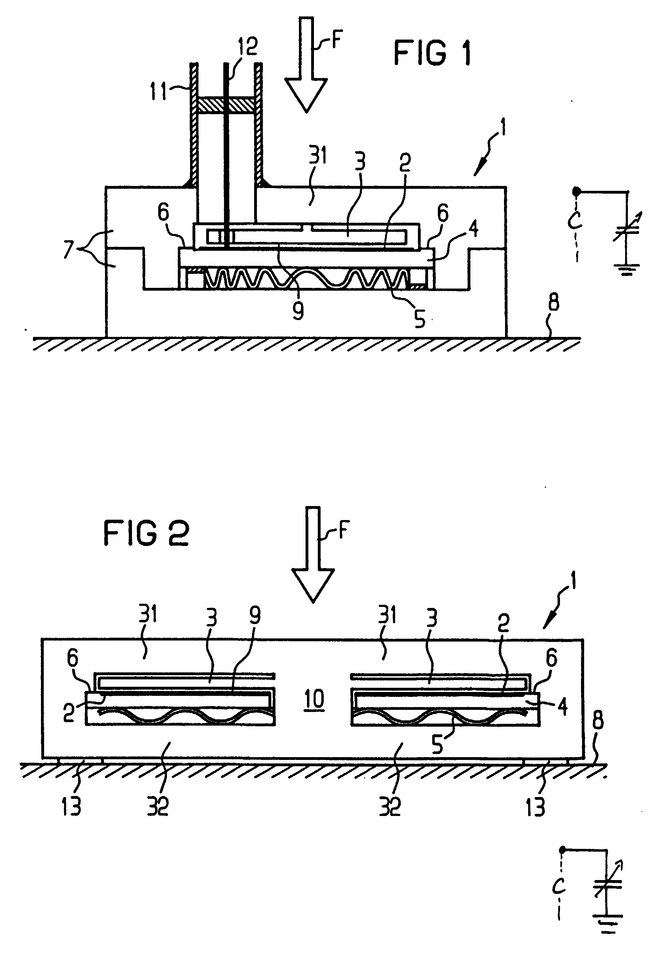

Bei den Figuren 1, 2 und 4 ist jeweils ein elektrisches Ersatzschaltbild beigeordnet.

Ein erfindungsgemäßer kapazitiver Kraftsensor 1 wird zwischen Stellantrieb (Aktuator) und Bremssattel 14 eingesetzt. Dieser zweckmäßigerweise flache aus einem geschlossenen metallischen Hohlzylinder bestehende Sensor 1 muß den ungünstigsten Betriebsbedingungen widerstehen. Zur mechanischen Stabilität tragen zunächst die Zylinderwandungen bei. Eine oder beide Stirnseiten dienen als kraftaufnehmende Membran 31,32 , so daß eine elastische Deformation einer oder beider Stirnseiten auf den innerhalb des Sensors 1 befindlichen Plattenkondensator übertragen wird, wodurch ein kraft- bzw. deformationsabhängiges Meßsignal generiert wird.

Die Darstellung des innenliegenden Plattenkondensators geschieht durch eine Metallscheibe 3 (zweite Elektrode) und eine einseitig partiell metallisierte Isolatorscheibe 4, wobei die Metallisierung die erste Elektrode 2 darstellt. Erste Elektrode 2 und zweite Elektrode 3 weisen einen gegenseitigen Elektrodenabstand 9 von ca. 100 µm auf. Das grundlegende in Figur 1 erkennbare Prinzip besteht darin, daß die kraftaufnehmende Membran 31 ungefähr in ihrem Mittelpunkt mit dem Mittelpunkt der Metallscheibe 3 (zweite Elekktrode) verbunden ist. Die erste Elektrode 2 wird der Metallscheibe 3 gegenüberliegend derart an eine im Innenraum des Sensors 1 ausgebildete Auflage 6 gedrückt, daß sich die Metallscheibe 3 und die Isolatorscheibe 4 mit der Metallisierung (erste Elektrode) parallel gegenüberliegen. Diese Konstruktion ermöglicht bei Deformation der kraftaufnehmenden Membran 31 eine gleichmäßige Veränderung des Elektrodenabstandes 9 über die gesamte Fläche des Plattenkondensators. Somit ist ausgeschlossen, daß bei Deformation der kraftaufnehmenden Membran 31 durch eine zentral auf diese wirkende Kraft, beispielsweise die Bremskraft F, sich der Elektrodenabstand 9 in der Mittel des Plattenkondensators mehr verändert als an dessen Rand. Als Resultat ergibt sich eine hohe Meßgenauigkeit mit guter Reproduzierbarkeit der Meßsignale. Andererseits darf die Bremskraft F nicht ganzflächig auf dem Sensor 1 verteilt werden, da sonst keine Deformation an einer Stirnseite erfolgt.

Figur 1 zeigt insbesondere, daß das Gehäuse des Sensors 1 zur Montage aus Elementen 7 bestehen muß, so daß der geschlossene Hohlzylinder nach dem Einbau der inneren Bestandteile zusammengesetzt werden kann. Gleichzeitig ist ein Anschluß 11 angedeutet, über den eine Signalleitung 12 nach außen geführt werden kann. Der Innenraum des Sensors 1 muß zum Schutz gegen Verschmutzgungen hermetisch abgedichtet sein. Die in Figur 1 gewählte Ausführung setzt voraus, daß das Gehäuse bzw. die Metallscheibe 3 elektrisch an Masse gelegt sind, so daß ein elektrisches Signal aufnehmbar ist. Die Isolatorscheibe 4 ist zweckmäßigerweise aus Quarzglas, so daß eine hohe Temperatur-Beständigkeit bei geringen thermisch bedingten Ausdehnungen gegeben ist. Mittels der Feder 5, einer ringförmigen Wellenfeder, die umlaufend ausgebildet ist, wird die Isolatorscheibe 4 mit geringem seitlichen Spielraum gegegenüber dem Sensorgehäuse an den oder die Anschläge 6 gedrückt. Somit ist die Lage der Isolatorscheibe 4 die mit ihrer metallisierten Seite die erste Elektrode 2 darstellt, ständig definiert. Dabei ist anzumerken, daß die Isolatorscheibe 4 direkt an den Anschlägen 6 aufliegt und in diesen Bereichen keine Metallisierung vorhanden ist, so das kein elektrischer Kontakt zwischen Gehäuse und Metallisierung vorhanden ist. Somit können keine durch beispielsweise Schweiß- oder Lötverbindungen entstehende thermomechanischen Spannungen die Sollage dieser Isolatorscheibe 4 beeinflussen. Dies gilt sowohl bei Vibrationen, als auch bei hohen Temperaturen. Vibrationen durch senkrechte Stoßbeanspruchungen bei Kraftfahrzeugrädern wirken beispielsweise nicht senkrecht zu den Elektrodenflächen des Plattenkondensators bei Bremsanlagen üblicher Bauart.

Der robuste Plattenkondensator der bei Einleitung der Bremskraft F an einer Membran seinen Elektrodenabstand 9 beispielsweise um die Hälfte verringert, funktioniert bei hohen Temperaturschwankungen. Dieses System ist ebenso in Figur 2 verwirklicht, wobei der Sensor 1 in diese Ausführung zwei kraftaufnehmende Membranen bzw. deformierbare Membranen 31, 32 aufweist. Die beiden Membranen 31, 32 sind über eine Membranverbindung 10 zentral mechanisch miteinander verbunden. Die Isolatorscheibe 4, ebenfalls eine Quarzscheibe, stellt wiederum durch eine einseitig darauf aufgebrachte Metallisierung die erste Elektrode 2 dar. Diese erste Elektrode 2 ist entsprechend Figur 1 mit einer Feder 5 federunterstützt an Anschlägen 6 in einer Sollage positioniert und hat seitlich an den Außenrändern ein minimales Spiel zum Gehäuse des Sensors 1. Durch entsprechend plazierte Distanzelemente 13 wird eine elastische Deformation der Membran 32 ermöglicht, da diese nicht vollflächig aufliegt. Die die zweite Elektrode darstellende Metallscheibe 3 ist in diesem Fall direkt mitt der Membranverbindung 10 verbunden, so daß diese zweite Elektrode sich ebenfalls wie in Fig. 1 bei einer Krafteinleitung mit der Deformation der Membranen 31 bzw 32 gleichmäßig auf die erste Elektrode 2 zu bewegt. Somit wird hier auch hier eine gleichmäßige Verringerung des Elektrodenabstandes 9 über die gesamte Kondensatorfläche bewirkt.

In Figur 2 ist auf die Darstellung einer elektrischen Zuleitung verzichtet worden. In beiden Ausführungen, sowohl nach Figur 1 als auch nach Figur 2 sollte die Signalweiterleitung an eine Meßelektronik geschehen, die in Bereichen mit deutlich niedrigerer Temperaturbelastung positioniert ist. Die Verbindung wird zweckmäßigerweise durch ein hochtemperaturfestes koaxiales Kabel mit geringer Kapazitätsbelegung verwirklicht. Der Sensor 1 kann beispielsweise einen Durchmesser von 4 cm und eine Höhe von etwa 12 mm aufweisen. Bei einer Bremskraft F von 2,5 Tonnen ändert sich die Meßkapazität beispielsweise von 50 pF auf 100 pF. Wird die Metallscheibe 3 am Membranmittelpunkt bzw. an deren Ansatz an der Membranverbindung entsprechend isoliert, so kann auch ein massefreier Meßkondensator realisiert werden. Andernfalls ist jedoch auch in Figur 2 eine Signalleitung 12 einzubauen und das äußere Gehäuse des Sensors 1 an Masse zu legen.

Durch die Summe der in den Figuren 1 und 2 dargestellten Merkmale wird ein Kraftsensor 1 geliefert, der einerseits mechanisch stabil ausgebildet ist, deformierbare kraftaufnehmende Membranen 31,32 aufweist, über die in Verbindung mit einem Plattenkondensator die vom Sensor 1 aufgenommene bzw. weitergeleitete Kraft meßbar ist. Dies geschieht aufgrund der Konstruktion des innenliegenden Plattenkondensators mit hoher Genauigkeit (weniger als 1% Abweichung). Die Anforderungen bezüglich eines hohen Meßbereiches für die zu messende Kraft bzw. für den Bereich der Betriebstemperatur werden erfüllt.

Darüber hinaus weist der Sensor 1 eine Stabilität gegenüber mechanischen Schwingungen auf, die beispielsweise beim Betrieb einer Kraftfahrzeugbremseanlage erscheinen. Der Sensor spricht innerhalb von 100 ms an.

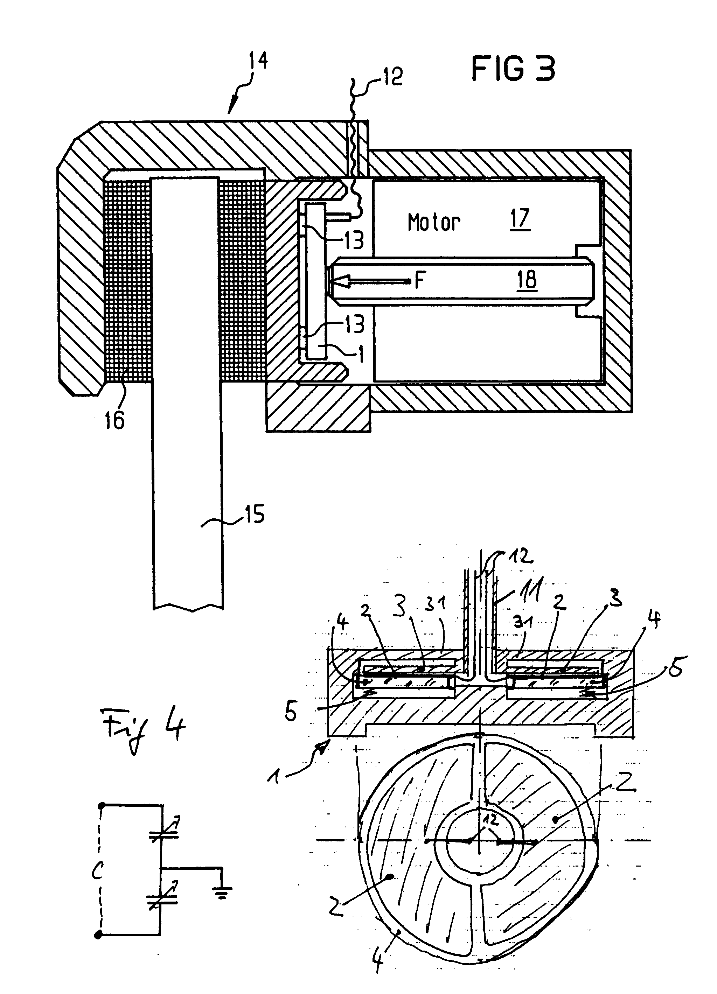

Figur 3 zeigt, einen Sensor 1 in Kombination mit einer Kraftfahrzeugbremsanlage. Dabei ist in üblicher Weise relativ zu einer rotierenden Bremsscheibe 15 ein Bremssattel 16 mit Bremsbelägen positioniert. Um die Bremsbeläge 16 entsprechend an die Bremsscheibe 15 andrücken zu können, muß eine Kraft auf den umgreifenden Bremssattel 14 ausgeübt werden. Dies geschieht in diesem Fall über einen elektrischen Motor 17 der eine Spindel 18 bewegt. Elektrische Zuleitungen für den Motor 17 sind nicht dargestellt. Die damit erzeugte Bremskraft F ist natürlich kombiniert mit einer Stützkraft mit der sich der Motor beispielsweise gegen ein den Motor umgreifendes Gehäuse nach hinten bzw. in Gegenrichtung abstützt. Durch Betätigung des Motors 17 wird die Spindel 18 in Richtung auf den Sensor 1 ausgefahren und erzeugt die Bremskraft F. Die Funktion des Kraftsensors 1 geschieht entsprechend der Beschreibungen der Figuren 1 und 2. Die Signalleitung 12 führt Signale aus dieser hochtemperaturbelasteten Zone zuverlässig nach außen, wobei der Kraftsensor 1 insgesamt abgeschlossen sein sollte, um Eindringen von Verschmutzungen zu vermeiden.

Figur 4 zeigt eine besonders vorteilhafte Ausgestaltung der Erfindung, wobei aus Gründen der Meßsicherheit die Kapazität des Plattenkondensators nicht gegen Masse gemessen wird. Dazu wird der Plattenkondensator konstruktiv so ausgelegt, daß die mit Masse verbundene zweite Elektrode, die durch eine Metallscheibe 3 dargestellt wird, entsprechend der Figuren 1 oder 2 ausgeführt ist. Die erste Elektrode 2 ist jedoch entsprechend Figur 4 in zwei Teile geteilt. Dieses Teil ist mit einer Signalleitung 12 verbunden, so daß entsprechend dem in Figur 4 dargestellten Ersatzschaltbild in einer symmetrischen Messung die Kapazität der beiden veränderbaren Kondensatoren gemessen wird. Aufgrund dieser konstruktiven Darstellung liegt körperlich eine einzige Elektrode 2 vor, die jedoch in sich unterteilt ist. Dies bewirkt, daß sich die erste Elektrode 2 und die durch die Metallscheibe 3 dargestellte zweite Elektrode aufgrund der beschriebenen Ausführung bei gegenseitigen Abstandsänderungen zwischen den Elektroden über die gesamte Fläche aufeinander zu oder wegbewegen. Mit anderen Worten wird auch hier eine Änderung der Geometrie der planar ausgeführten Elektroden vermieden. Somit ist auch in der Ausgestaltung in Figur 4 eine ausreichend große Kondensatorfläche erzielbar, wobei nicht auf in ihrer Geometrie veränderbare Membranen als Teile des Plattenkondensators zurückgegriffen werden muß. Diese Vorteile können bei kleinstem Bauvolumen des Kraftsensors verwirklicht werden und auch innerhalb eines großen Betriebstemperaturbereiches ausgenutzt werden.

### Bezugszeichenliste

- 1: Sensor
- 2: Erste Elektrode
- 3: Metallscheibe (zweite Elektrode)
- 31, 32: Membran
- 4: Isolatorscheibe
- 5: Feder
- 6: Auflage, Anschlag
- 7: Element des Hohlzylinders
- 8: Bremsbacke
- 9: Elektrodenabstand
- 10: Membranverbindung
- 11: Anschluß
- 12: Signalleitung
- 13: Distanzelement
- 14: Bremssattel
- 15: Bremsscheibe
- 16: Bremsbelag
- 17: Motor
- 18: Spindel
- F: Bremskraft

## Patentansprüche

1. Kraftsensor zur direkten Kraftmessung im Kraftfluß bestehend aus:
- einem geschlossenen Hohlzylinder, dessen eine Stirnseite eine elastisch deformierbare Membran (31) darstellt, auf die die Kraft eingeleitet wird,
- einem innenliegenden Plattenkondensator, der bei äußerer Krafteinwirkung auf die Membran (31) seinen Plattenabstand (9) verändert,
- einer einseitig partiell metallisierten Isolatorscheibe (4) zur Darstellung einer ersten Elektrode (2) des Plattenkondensators, die federunterstützt mit der metallisierten Seite in Richtung auf die Membran (31) an eine Auflage (6) im Hohlzylinderinnenraum angedrückt und parallel zu der Membran (31) ausgerichtet ist, wobei die Isolatorscheibe (4) direkt auf der Auflage (6) aufliegt,
- einer die zweite Elektrode des Plattenkondensators darstellende und der Metallisierung auf der Isolatorscheibe (4) gegenüberliegende Metallscheibe (3), wobei die Membran (31) und die Metallscheibe (3) lediglich im Zentrum miteinander verbunden sind, die Metallscheibe (3) parallel zur Isolatorscheibe (4) ausgerichtet ist und bei Bewegungen der Membran (31) der Elektrodenabstand (9) gleichmmäßig über die gesamten Elektrodenfläche veränderbar ist.

2. Kraftsensor zur direkten Kraftmessung im Kraftfluß bestehend aus:
- einem geschlossenen Hohlzylinder dessen beide Stirnseiten elastisch deformierbare Membranen (31, 32) darstellen, die im Hohlzylinderinnenraum mittig durch eine Membranverbindung (10) mechanisch miteinander verbunden sind,
- einem innenliegenden Plattenkondensator der bei äußerer Krafteinwirkung auf die Membranen (31, 32) seinen Plattenabstand (9) verändert,
- einer einseitig partiell metallisierten Isolatorscheibe (4) zur Darstellung einer ersten Elektrode (2) des Plattenkondensators, die federunterstützt mit der metallisierten Seite in Richtung auf eine der Membranen (31, 32) an eine Auflage (6) im Hohlzylinderinnenraum angedrückt und parallel zu einer Membranen (31, 32) ausgerichtet ist, wobei die Isolatorscheibe (4) direkt auf der Auflage (6) aufliegt und eine zentrale Öffnung aufweist, durch die die mechanische Membranverbindung (10) hindurchgeführt ist,
- einer die zweite Elektrode des Plattenkondensators darstellende und der Metallisierung auf der Isolatorscheibe (4) gegenüberliegende Metallscheibe (3) wobei eine der Membranen (31, 32) und die Metallscheibe (3) lediglich im Zentrum miteinander verbunden sind, die Metallscheibe (3) parallel zur Isolatorscheibe (4) ausgerichtet und bei Bewegungen der mechanischen Membranverbindung (10) gleichzeitig mit den Membranen (31, 32) der Elektrodenabstand (9) gleichmäßig über die gesamte Elektrodenfläche veränderbar ist,
- Distanzelementen (13), die außen an einer Stirnseite des Kraftsensors angebracht sind, so daß die Membranen (31, 32) frei bewegbar sind.

3. Kraftsensor nach einem der vorhergehenden Ansprüche, worin die Isolatorscheibe (4) eine Quarzscheibe ist.

4. Kraftsensor nach einem der vorhergehenden Ansprüche, worin der Elektrodenabstand (9) ca. 100 µm beträgt.

5. Kraftsensor nach einem der vorhergehenden Ansprüche, worin die Signalableitung mittels eines koaxialen Kabels mit geringer Kapazitätsbelegung geschieht.

6. Kraftsensor nach einem der vorhergehenden Ansprüche, worin die Metallscheibe (3) gegenüber der Membran (31) bzw. gegenüber der Membranverbindung (10) elektrisch isoliert ist und einen separaten koaxialen Anschluß aufweist, wodurch ein massefreier Kondensator vorliegt.

7. Kraftsensor nach einem der vorhergehenden Ansprüche lautet, worin zur symmetrischen und massefreien Messung der Kapazität des Plattenkondensators die erste Elektrode (2) zweigeteilt ist, wobei jede Hälfte über Signalleitungen (12) elektrisch kontaktiert ist.

8. Verwendung eines Kraftsensors nach einem der vorhergehenden Ansprüche im Kraftfluß an einem Bremssattel (14) für ein Fahrzeug.

## Claims

1. Force sensor for direct force measurement in the path of a force, comprising:
- a closed hollow cylinder, one of whose ends constitutes an elastically deformable diaphragm (31), onto which the force is introduced,
- an internal plate capacitor, which changes its plate spacing (9) in the event of external action of force on the diaphragm (31),
- an insulator disc (4), which is partially metallized on one side, serves to constitute a first electrode (2) of the plate capacitor and, with spring assistance, is pressed by the metallized side in the direction of the diaphragm (31) onto a support (6) in the hollow cylinder interior and is aligned parallel to the diaphragm (31), the insulator disc (4) bearing directly on the support (6),
- a metal disc (3), which constitutes the second electrode of the plate capacitor and is situated opposite the metallization layer on the insulator disc (4), the diaphragm (31) and the metal disc (3) being connected to one another only in the centre, the metal disc (3) being aligned parallel to the insulator disc (4) and, in the event of movements of the diaphragm (31), it being possible for the electrode spacing (9) to change uniformly over the entire electrode area.

2. Force sensor for direct force measurement in the path of a force, comprising:
- a closed hollow cylinder, both of whose ends constitute elastically deformable diaphragms (31, 32), which are mechanically connected to one another centrally by a diaphragm connection (10) in the hollow cylinder interior,
- an internal plate capacitor, which changes its plate spacing (9) in the event of external action of force on the diaphragms (31, 32),
- an insulator disc (4), which is partially metallized on one side, serves to constitute a first electrode (2) of the plate capacitor and, with spring assistance, is pressed by the metallized side in the direction of one of the diaphragms (31, 32) onto a support (6) in the hollow cylinder interior and is aligned parallel to one of the diaphragms (31, 32), the insulator disc (4) bearing directly on the support (6) and having a central opening through which the mechanical diaphragm connection (10) is passed,
- a metal disc (3), which constitutes the second electrode of the plate capacitor and is situated opposite the metallization layer on the insulator disc (4), one of the diaphragms (31, 32) and the metal disc (3) being connected to one another only in the centre, the metal disc (3) being aligned parallel to the insulator disc (4) and, in the event of movements of the mechanical diaphragm connection (10) at the same time as the diaphragms (31, 32), it being possible for the electrode spacing (9) to change uniformly over the entire electrode area,
- spacer elements (13), which are fitted on the outside on one end of the force sensor, so that the diaphragms (31, 32) are freely movable.

3. Force sensor according to one of the preceding claims, in which the insulator disc (4) is a quartz disc.

4. Force sensor according to one of the preceding claims, in which the electrode spacing (9) is approximately 100 µm.

5. Force sensor according to one of the preceding claims, in which the signal output conduction is effected by means of a coaxial cable with a low capacitance per unit length.

6. Force sensor according to one of the preceding claims, in which the metal disc (3) is electrically insulated from the diaphragm (31) and/or from the diaphragm connection (10) and has a separate coaxial connection, as a result of which a floating capacitor is present.

7. Force sensor according to one of the preceding claims, in which, for the balance and floating measurement of the capacitance of the plate capacitor, the first electrode (2) is divided into two, electrical contact being made with each half via signal lines (12).

8. Use of a force sensor according to one of the preceding claims in the path of a force on a brake caliper (14) for a vehicle.

## Revendications

1. Capteur de forces destiné à la mesure de forces directes dans le flux de forces, comprenant :
- un cylindre creux fermé dont un côté frontal représente une membrane (31) pouvant subir une déformation élastique, sur laquelle la force est exercée,
- un condensateur à lames situé à l'intérieur et qui, lorsqu'une force extérieure agit sur la membrane (31), modifie la distance (9) entre ses lames,
- une rondelle isolante (4) partiellement métallisée sur un côté destinée à représenter une première électrode (2) du condensateur à lames et qui, soutenue par un ressort, est pressée, avec le côté métallisé en direction de la membrane (31), sur un appui (6) à l'intérieur du cylindre creux et est orientée parallèlement à la membrane (31), la rondelle isolante (4) étant posée directement sur l'appui (6),
- une rondelle métallique (3) représentant la seconde électrode du condensateur à lames et située en face de la métallisation sur la rondelle isolante (4), la membrane (31) et la rondelle métallique (3) étant simplement reliées l'une à l'autre en leur centre, la rondelle métallique (3) étant orientée parallèlement à la rondelle isolante (4) et la distance interélectrodes (9) pouvant, lors de mouvements de la membrane (31), être modifiée de manière uniforme sur toute la surface des électrodes.

2. Capteur de forces destiné à la mesure de forces directes dans le flux de forces, comprenant :
- un cylindre creux fermé dont les deux côtés frontaux représentent des membranes (31, 32) pouvant subir une déformation élastique qui sont reliées mécaniquement l'une à l'autre en leur centre, à l'intérieur du cylindre creux, grâce à une jonction de membranes (10),
- un condensateur à lames situé à l'intérieur et qui, lorsqu'une force extérieure agit sur les membranes (31, 32), modifie la distance (9) entre ses lames,
- une rondelle isolante (4) partiellement métallisée sur un côté destinée à représenter une première électrode (2) du condensateur à lames et qui, soutenue par un ressort, est pressée, avec le côté métallisé en direction d'une des membranes (31, 32), sur un appui (6) à l'intérieur du cylindre creux et est orientée parallèlement à une des membranes (31, 32), la rondelle isolante (4) étant posée directement sur l'appui (6) et étant pourvue d'une ouverture centrale traversée par la jonction mécanique de membranes (10),
- une rondelle métallique (3) représentant la seconde électrode du condensateur à lames et située en face de la métallisation sur la rondelle isolante (4), une des membranes (31, 32) et la rondelle métallique (3) étant simplement reliées l'une à l'autre en leur centre, la rondelle métallique (3) étant orientée parallèlement à la rondelle isolante (4) et la distance interélectrodes (9) pouvant, lors de mouvements de la jonction mécanique de membranes (10) en même temps que les membranes (31, 32), être modifiée de manière uniforme sur toute la surface des électrodes,
- des éléments d'écartement (13) qui sont ajoutés à l'extérieur sur un côté frontal du capteur de forces, de manière à ce que les membranes (31, 32) puissent bouger librement.

3. Capteur de forces selon l'une des revendications précédentes, dans lequel la rondelle isolante (4) est une rondelle de quartz.

4. Capteur de forces selon l'une des revendications précédentes, dans lequel la distance interélectrodes (9) mesure environ 100 µm.

5. Capteur de forces selon l'une des revendications précédentes, dans lequel la conduction des signaux s'effectue au moyen d'un câble coaxial à capacité linéique réduite.

6. Capteur de forces selon l'une des revendications précédentes, dans lequel la rondelle métallique (3) est isolée électriquement par rapport à la membrane (31) resp. par rapport à la jonction de membranes (10) et est pourvue d'une connexion coaxiale séparée, grâce à quoi on obtient un condensateur sans masse.

7. Capteur de forces selon l'une des revendications précédentes, dans lequel, en vue de la mesure symétrique et sans masse de la capacité du condensateur à lames, la première électrode (2) est divisée en deux, chaque moitié étant mise en contact électrique par le biais de lignes d'acheminement des signaux (12).

8. Utilisation d'un capteur de forces selon l'une des revendications précédentes dans le flux de forces au niveau d'un étrier (14) pour un véhicule.
